# EUROPEAN PATENT SPECIFICATION

(11) **EP 3 381 985 B1**
(45) Date of publication and mention of the grant of the patent: **30.12.2020**
(21) Application number: 18164240.6
(22) Date of filing: 27.03.2018
(51) Int. Cl.: C09D 5/00

(54) **COMPRESSED GAS CONFINEMENT ARTICLE WITH BARRIER COATING**
DRUCKGASABGRENZUNGSARTIKEL MIT SPERRBESCHICHTUNG
ARTICLE DE CONFINEMENT DE GAZ COMPRIMÉ AVEC REVÊTEMENT BARRIÈRE

(30) Priority: 31.03.2017 US 201715475213
(43) Date of publication of application: 03.10.2018
(73) Proprietor: United Technologies Corporation, Farmington, CT 06032 (US)
(72) Inventor: Eastman, Scott Alan, Glastonbury, CT Connecticut 06033 (US); Fang, Xiaomei, Glastonbury, CT Connecticut 06073 (US); Thompson, Mark Steven, North Tolland, CT Connecticut 06084 (US); Zhao, Wenping, Glastonbury, CT Connecticut 06033 (US)
(74) Representative: Schmitt-Nilson Schraud Waibel Wohlfrom Patentanwälte Partnerschaft mbB

(56) References cited:
- EP-A1- 1 927 614
- EP-A2- 1 927 619
- EP-A2- 2 767 529
- WO-A1-2009/134538

## Description

The present disclosure relates to a confinement article and, more particularly, to a compressed gas confinement article with a barrier coating.

Confinement articles such as tanks, vessels, and conduits, may be designed to store compressed gases such hydrogen, natural gas, and other high pressure energy storage applications. In some applications, the articles may include confinement walls made of composite materials, which are generally lighter than more traditional metallic articles. The light weight attribute of confinement articles made of composites, make the articles ideal for aerospace and other transportation applications.

Composite articles (e.g., vessels), however, may have unique challenges including maintaining sufficient strength while minimizing permeability of the encapsulated compressed gas. Increasing wall thickness, or using a bulk liner within the confinement articles, may reduce permeability; however, it may also increase weight. Further development for composite confinement articles with reduced permeability is desirable.

EP 2 767 529 A2 shows a composition comprising at least one carrier fluid, precursors of a phosphate glass, and a plurality of filler nanoparticles having a mean aspect ratio of at least about 100. The composition can be applied to a composite substrate to form an oxidation protection coating including at least one phosphate glass barrier layer with a plurality of filler nanoparticles.

WO 2009/134538 A1 shows a water-based barrier coating composition that has improved barrier performance and enhanced stability. The water-based coating composition comprises a polymeric binder and an amine stabilizer, wherein the pH of the composition is equal to or greater than the pKa of the amine stabilizer. The disclosed coating composition may further include standard low-cost fillers, layered fillers capable of being at least partially exfoliated, nanoparticle fillers, or mixtures thereof. A multilayer product comprising a layer of the disclosed water-based coating composition is also disclosed that has enhanced oxygen barrier performance.

EP 1 927 619 A2 shows methods for forming thermal oxidative barrier coatings for organic matrix composite substrates including forming a bond coat and a thermal barrier layer to at least a surface of a component. The bond coat includes nano-particles dispersed in a polyimide matrix. The thermal barrier layer comprises a silsesquioxane or an inorganic polymer.

EP 1 927 614 A1 shows a thermal oxidative barrier coating for organic matrix composite substrates including a bond coat having nano-particles dispersed in a polyimide matrix and a thermal barrier layer comprising a silsequioxane or an inorganic polymer. The nano-particles may include clay platelets, graphite flakes or a polyhedral oligomeric silsesquioxane. The coated article may be utilized in gas turbine engine applications, particularly for a flow path duct adapted for exposure to high temperature, oxygen-containing environments.

Exemplary embodiments of the invention include a confinement article in accordance with claim 1. Further exemplary embodiments of the invention are given in the dependent claims.

Additionally to the foregoing embodiment, the fluid is a compressed gas.

In the alternative or additionally thereto, in the foregoing embodiment, the wall includes an inner surface defining a chamber, the fluid is in the chamber, and the nano-aligned barrier is a coating disposed on the inner surface.

In the alternative or additionally thereto, in the foregoing embodiment, the wall is a composite wall.

In the alternative or additionally thereto, in the foregoing embodiment, the fluid is a compressed gas.

In the alternative or additionally thereto, in the foregoing embodiment, the wall includes an inner surface defining a chamber, the fluid is in the chamber, and the nano-aligned barrier is a coating disposed on the inner surface.

In the alternative or additionally thereto, in the foregoing embodiment, the wall includes an inner surface defining a chamber and an outer surface, and wherein the nano-aligned barrier is a coating disposed on the outer surface.

In the alternative or additionally thereto, in the foregoing embodiment, the nano-aligned barrier is a film with aligned nano-platelets isolated in a polymer binder.

In the alternative or additionally thereto, in the foregoing embodiment, the film includes a thickness within a range of 2 to 500 nanometers, and each one of the nano-platelets include a maximum thickness of at least half the thickness of the film.

In the alternative or additionally thereto, in the foregoing embodiment, the nano-platelets are made of at least one of graphene, graphene oxide, clay, boron nitride, and mica.

In the alternative or additionally thereto, in the foregoing embodiment, the wall includes an inner layer and an outer layer, and the nano-aligned barrier is disposed between the inner and outer layers.

In the alternative or additionally thereto, in the foregoing embodiment, the coating is applied as an aqueous based system.

In the alternative or additionally thereto, in the foregoing embodiment, the nano-aligned barrier is applied as a solvent based system.

In the alternative or additionally thereto, in the foregoing embodiment, the nano-aligned barrier is made of nano-platelets amounting to a percent weight of between 50 to 99 percent.

In the alternative or additionally thereto, in the foregoing embodiment, the nano-aligned barrier is made of nano-platelets amounting to a percent weight of between 50 to 99 percent.

A vessel for storing a compressed gas according to another, non-limiting, embodiment includes a composite wall having an inner surface generally defining a chamber, wherein the compressed gas is in the chamber; and a barrier coating disposed on the inner surface, and including a binding polymer, a dispersion polymer, and aligned nano-platelets.

Additionally to the foregoing embodiment, the aligned nano-platelets includes at least one of graphene, graphene oxide, clay, boron nitride, and mica.

In the alternative or additionally thereto, in the foregoing embodiment, the dispersion polymer is less than about five percent by weight of the polymer binder fraction of the barrier coating.

In the alternative or additionally thereto, in the foregoing embodiment, the barrier coating has a thickness lying within a range of 2 to 500 nanometers.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

Various features will become apparent to those skilled in the art from the following detailed description of the disclosed non-limiting embodiments. The drawings that accompany the detailed description can be briefly described as follows:
FIG. 1 is a cross section of a confinement article configured to store and/or transport a fluid according to an exemplary embodiment of the invention; and
FIG. 2 is a partial cross section of a second embodiment of the confinement article.

The detailed description explains embodiments of the invention, together with advantages and features, by way of example with reference to the drawings.

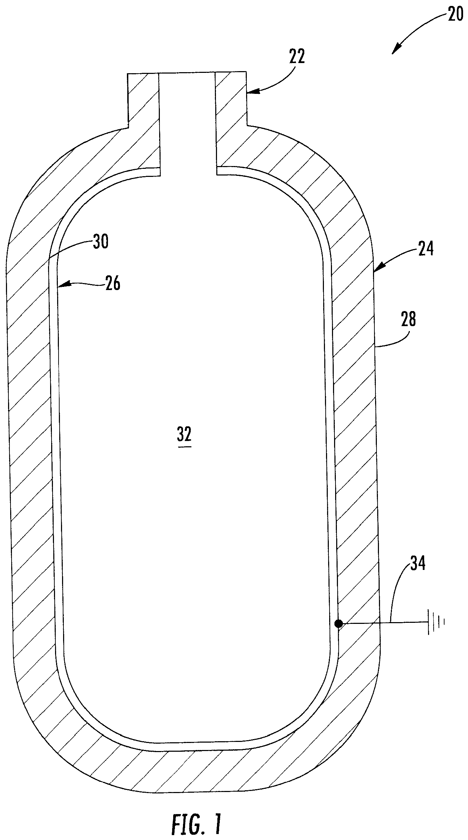

Referring now to FIG. 1, an example of a confinement article 20 adapted to contain a fluid is illustrated as a vessel or tank assembly. Another, non-limiting, example of a confinement article 20 may be a conduit or any other structure capable of containing and/or flowing a fluid. In one embodiment, the fluid may be a compressed gas. However, the fluid may be any gas or liquid that may, or may not be, under pressure, and is susceptible to permeation. Exemplary fluids that may be stored within the pressure vessel assembly 20 include, but are not limited to, compressed natural gas (CNG), hydrogen, propane, methane, air, argon, nitrogen, helium, carbon dioxide, hydraulic fluid, gasoline, octane, heptane, kerosene, jet fuel, and others..

The confinement article 20 may generally include a nozzle 22, a wall 24, and a barrier 26 that is a nano-aligned barrier. The wall 24 includes an outer surface 28 and an inner surface 30 that may generally defines a chamber 32 for storage of the fluid. The nozzle 22 may generally provide fluid flow into and/or out of the chamber 30. The wall 24 may be, or may include, a composite. In one example, the composite may be a continuous fiber wrapping, or prepregs, (i.e., fiber with resin) that provides the desired structural strength and distribution of internal stress. Alternatively, the composite wall 24 may be a braiding, or may be a resin impregnated chopped fiber. The primary reinforcement (i.e., the fibers or braiding), may be made of a carbon fiber, a glass fiber or an aramid fiber. A matrix material or resin for binding the continuous fibers may include epoxy, vinyl ester, urethane, and other resin polymers. It is further contemplated and understood that the wall 24 may comprise other materials and/or processes including automated fiber placement, winded filaments, and/or a mixture of continuous and non-continuous fiber.

In one embodiment, the barrier 26 may be applied to the inner surface 30 of the wall 24. The barrier 26 is a nano-aligned (i.e., filler aligned) coating that provides the primary gas barrier function of the composite confinement article 20. The preferred alignment of the fillers may be parallel to the applied inner surface. While it is not necessary to have perfectly parallel alignment, the more parallel the filler is to the inner surface, the higher may be the barrier properties. The barrier 26 may be substantially comprised of exfoliated graphite nano-platelets applied via a one-step solution coating process with appropriate nano-filled coating solutions. Alternatively, the barrier 26 may be applied via a multi-step process that may include spraying, dipping, blade coating, or a wash process. Other examples of platelets may include graphene, graphene oxide, clay, boron nitride, mica, or a combination thereof to achieve the desired fluid barrier properties. In one embodiment, the barrier 26 may be about fifty percent (50%) to ninety-nine percent (99%) by weight of platelets with the other fifty percent (50%) to one percent (1%) comprising a polymer binder. The polymer binder may be a single polymer material or a combination of materials where up to about five percent (5%) by weight of the polymer binder fraction of the barrier coating is added to aid dispersion of the nano-platelets.

The barrier 26 may generally be a thin film having a thickness lying within a range of about two nanometers (2nm) to five-hundred nanometers (500nm). The size of the individual nano-platelets dispersed in the film may have a maximum thickness of at least half the thickness of the resulting film, and preferably smaller. Each nano-platelet may also have at least one dimension that is normal to the thickness dimension and greater than about two-times the thickness dimension. Higher aspect ratio fillers may be more effective at enhancing barrier properties. It is contemplated and understood the barrier 26 may also, or alternatively, be applied to the outer surface 28 of the wall 24.

To facilitate application, the barrier 26 may be an aqueous or solvent based system. As an aqueous based system, the binder polymer may be water soluble. Examples may include polyethylene glycol, polyvinyl alcohol, copolyacetate, polyethylene imine, and polyacrylamide. As a solvent based system, the binder polymer may be soluble in the respective solvent. Examples may include polyurethane, polystyrene, polybutadiene copolymers, polystyrene, polybutadiene, polyetheylene copolymers, polyvinyl chloride, ethylene propylene diene monomer (EPDM), and rubber.

In one embodiment, the confinement article 20 includes an electrical conductor 34 that minimizes or eliminates any potential buildup of an electrostatic charge upon the article 20. To facilitate this feature, the conductor 34 is electrically connected to, and extends between, the barrier 26 and ground.

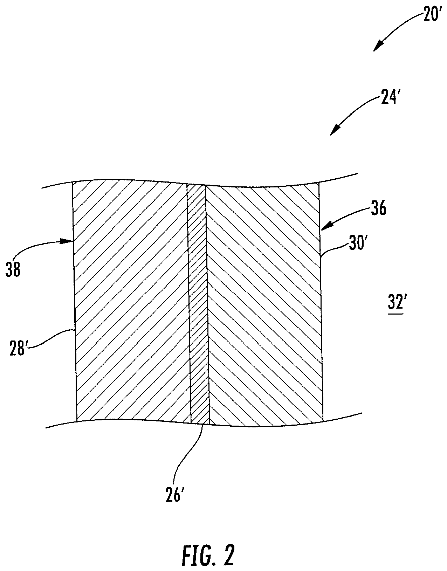

Referring to FIG. 2, a second embodiment of the confinement article is illustrated wherein like elements to the first embodiment have like identifying numerals except with the addition of a prime symbol suffix. A confinement article 20' includes a wall 24' that may include an inner layer 36 having an inner surface 30' that generally defines a chamber 32', and an outer layer 38 that carriers an outer surface 28'. A nano-aligned barrier 26' may be disposed between the layers 36, 38.

In one embodiment, the inner and outer layers 36, 38 may both be made of a composite material. In another embodiment, the inner layer 36 may be a liner. As a liner, the layer 36 may be a contoured bladder having a minimal wall thickness. The liner 36 may be made of any material and wall thickness capable of providing necessary structural rigidity while minimizing weight, reducing costs, and meeting other parameters necessary for a particular application. Examples of liner material may include plastic (e.g., thermoplastic, thermoset, and other polymer materials), elastomeric material, and other resilient liner materials. The liner 36 may be manufactured by any variety of techniques including blow molded plastic, injection molded plastic, and others. It is further contemplated and understood that the liner 36 may have the necessary structural integrity to maintain a pre-formed shape either standing on their own, or, during a manufacturing process that adds or envelopes the liners with the additional layer 38 that may be a composite material for structural strength. It is further contemplated and understood that the barrier 26' may be applied to the inner surface 30' of the liner 36.

Advantages and benefits of the present disclosure include a lightweight confinement article capable of storing and/or transporting a compressed fluid with improved barrier performance. Other advantages may include the elimination of a more traditional liner with improved barrier performance that may exceed two to three time the order of magnitude. Yet further, the present disclosure may reduce bulkiness and contribute toward a reduction in cost.

While the present disclosure is described with reference to exemplary embodiments, it will be understood by those skilled in the art that various changes may be made and equivalents may be substituted without departing from the scope of the present disclosure. In addition, various modifications may be applied to adapt the teachings of the present disclosure to particular situations, applications, and/or materials, without departing from the essential scope thereof. The present disclosure is thus not limited to the particular examples disclosed herein, but includes all embodiments falling within the scope of the appended claims.

## Claims

1. A confinement article (20) for containing a fluid, the confinement article (20) comprising:
a wall (24) constructed and arranged to contain the fluid;
a nano-aligned barrier (26) co-extending with the wall (24), and constructed and arranged to restrict permeation of the fluid; and
an electrical conductor (34) electrically connected to, and extends between, the nano-aligned barrier (26) and a ground,
wherein the electrical conductor (34) is configured to minimize buildup of an electrostatic charge upon the confinement article (20).

2. The confinement article (20) set forth in claim 1, wherein the fluid is a compressed gas.

3. The confinement article (20) set forth in claim 1 or 2, wherein the wall (24) includes an inner surface (30) defining a chamber (32), the fluid is in the chamber (32), and the nano-aligned barrier (26) is a coating or film disposed on the inner surface (30).

4. The confinement article (20) set forth in any of claims 1 to 3, wherein the wall (24) is a composite wall (24); wherein the wall (24) particularly includes an inner surface (30) defining a chamber (32) and an outer surface (28), and wherein the nano-aligned barrier (26) is a coating or film disposed on the outer surface (28).

5. The confinement article (20) set forth in any of claims 1 to 4, wherein the nano-aligned barrier (26) is a film with aligned nano-platelets isolated in a polymer binder.

6. The confinement article (20) set forth in claim 5, wherein the film includes a thickness within a range of 2 to 500 nanometers.

7. The confinement article (20) set forth in claim 5 or 6, wherein each one of the nano-platelets includes a maximum thickness of at least half the thickness of the film.

8. The confinement article (20) set forth in any of claims 5 to 7, wherein the nano-platelets include, or are made of, at least one of graphene, graphene oxide, clay, boron nitride, and mica.

9. The confinement article (20) set forth in any of claims 1 to 8, wherein the wall (24) includes an inner layer (36) and an outer layer (38), and the nano-aligned barrier (26) is disposed between the inner and outer layers (36, 38).

10. The confinement article (20) set forth in any of claims 1 to 9, wherein the nano-aligned barrier is applied as an aqueous based system or as a solvent based system.

11. The confinement article (20) set forth in any of claims 1 to 10, wherein the nano-aligned barrier (26) is made of nano-platelets amounting to a percent weight of between 50 to 99 percent.

12. A vessel for storing a compressed gas, the vessel comprising a confinement article (20) according to any of the previous claims.

13. The vessel set forth in claim 12, further comprising:
a composite wall (24) having an inner surface (30) generally defining a chamber (32), wherein the compressed gas is in the chamber (32); and
a barrier coating disposed on the inner surface (30), and including a binding polymer, a dispersion polymer, and aligned nano-platelets.

14. The vessel set forth in claim 13, wherein the dispersion polymer is less than about five percent by weight of the polymer binder fraction of the barrier coating.

## Patentansprüche

1. Abgrenzungsartikel (20) zum Enthalten eines Fluids, wobei der Abgrenzungsartikel (20) Folgendes beinhaltet:
eine Wand (24), die gebaut und angeordnet ist, um das Fluid zu enthalten;
eine nano-ausgerichtete Barriere (26), die sich mit der Wand (24) gleich erstreckt und gebaut und angeordnet ist, um das Eindringen des Fluids zu begrenzen; und
einen elektrischen Leiter (34), der elektrisch verbunden ist mit und sich zwischen der nano-ausgerichteten Barriere (26) und einem Boden erstreckt,
wobei der elektrische Leiter (34) dazu konfiguriert ist, eine Ansammlung einer elektrostatischen Ladung auf dem Abgrenzungsartikel (20) zu verringern.

2. Abgrenzungsartikel (20) nach Anspruch 1, wobei das Fluid ein Druckgas ist.

3. Abgrenzungsartikel (20) nach Anspruch 1 oder 2, wobei die Wand (24) eine Innenfläche (30) beinhaltet, die eine Kammer (32) definiert, wobei das Fluid in der Kammer (32) ist und die nano-ausgerichtete Barriere (26) eine Beschichtung oder Folie ist, die an der Innenfläche (30) angeordnet ist.

4. Abgrenzungsartikel (20) nach einem der Ansprüche 1 bis 3, wobei die Wand (24) eine Verbundwand (24) ist; wobei die Wand (24) insbesondere eine Innenfläche (30), die eine Kammer (32) definiert, und eine Außenfläche (28) beinhaltet, und wobei die nano-ausgerichtete Barriere (26) eine Beschichtung oder Folie ist, die an der Außenfläche (28) angeordnet ist.

5. Abgrenzungsartikel (20) nach einem der Ansprüche 1 bis 4, wobei die nano-ausgerichtete Barriere (26) eine Folie mit ausgerichteten Nano-Plättchen ist, die in einem Polymerbindemittel isoliert sind.

6. Abgrenzungsartikel (20) nach Anspruch 5, wobei die Folie eine Dicke innerhalb eines Bereichs von 2 bis 500 Nanometern beinhaltet.

7. Abgrenzungsartikel (20) nach Anspruch 5 oder 6, wobei jedes der Nano-Plättchen eine maximale Dicke von mindestens der halben Dicke der Folie beinhaltet.

8. Abgrenzungsartikel (20) nach einem der Ansprüche 5 bis 7, wobei die Nano-Plättchen mindestens eines von Graphen, Graphenoxid, Ton, Bornitrid und Glimmer (Mica) beinhalten oder daraus hergestellt sind.

9. Abgrenzungsartikel (20) nach einem der Ansprüche 1 bis 8, wobei die Wand (24) eine Innenschicht (36) und eine Außenschicht (38) beinhaltet, und die nano-ausgerichtete Barriere (26) zwischen der Innen- und Außenschicht (36, 38) angeordnet ist.

10. Abgrenzungsartikel (20) nach einem der Ansprüche 1 bis 9, wobei die nano-ausgerichtete Barriere als ein System auf Wasserbasis oder als ein System auf Lösungsmittelbasis angewendet wird.

11. Abgrenzungsartikel (20) nach einem der Ansprüche 1 bis 10, wobei die nano-ausgerichtete Barriere (26) aus Nano-Plättchen hergestellt ist, die sich auf ein Prozentgewicht von zwischen 50 und 99 Prozent belaufen.

12. Behälter zum Lagern eines Druckgases, wobei der Behälter einen Abgrenzungsartikel (20) nach einem der vorhergehenden Ansprüche umfasst.

13. Behälter nach Anspruch 12, ferner umfassend:
eine Verbundwand (24), die eine Innenfläche (30) aufweist, die im Allgemeinen eine Kammer (32) definiert, wobei das Druckgas in der Kammer (32) ist; und
eine Barrierebeschichtung, die an der Innenfläche (30) angeordnet ist und ein Bindungspolymer, ein Dispersionspolymer und ausgerichtete Nano-Plättchen beinhaltet.

14. Behälter nach Anspruch 13, wobei das Dispersionspolymer geringer als etwa fünf Gewichtsprozent der Polymerbindemittelfraktion der Barrierebeschichtung ist.

## Revendications

1. Article de confinement (20) destiné à contenir un fluide, l'article de confinement (20) comprenant :
une paroi (24) construite et agencée pour contenir le fluide ;
une barrière nano-alignée (26) s'étendant conjointement avec la paroi (24), et construite et agencée pour limiter la perméation du fluide ; et
un conducteur électrique (34) relié électriquement à la barrière nano-alignée (26) et à une masse, et s'étendant entre ceux-ci,
dans lequel le conducteur électrique (34) est conçu pour réduire le plus possible l'accumulation d'une charge électrostatique sur l'article de confinement (20).

2. Article de confinement (20) selon la revendication 1, dans lequel le fluide est un gaz comprimé.

3. Article de confinement (20) selon la revendication 1 ou 2, dans lequel la paroi (24) comporte une surface interne (30) définissant une chambre (32), le fluide se trouve dans la chambre (32) et la barrière nano-alignée (26) est un revêtement ou un film disposé sur la surface interne (30).

4. Article de confinement (20) selon l'une quelconque des revendications 1 à 3, dans lequel la paroi (24) est une paroi composite (24) ; dans lequel la paroi (24) comporte en particulier une surface interne (30) définissant une chambre (32) et une surface externe (28), et dans lequel la barrière nano-alignée (26) est un revêtement ou un film disposé sur la surface externe (28).

5. Article de confinement (20) selon l'une quelconque des revendications 1 à 4, dans lequel la barrière nano-alignée (26) est un film avec des nano-plaquettes alignées isolées dans un liant polymère.

6. Article de confinement (20) selon la revendication 5, dans lequel le film présente une épaisseur dans une plage comprise entre 2 et 500 nanomètres.

7. Article de confinement (20) selon la revendication 5 ou 6, dans lequel chacune des nano-plaquettes présente une épaisseur maximale d'au moins la moitié de l'épaisseur du film.

8. Article de confinement (20) selon l'une quelconque des revendications 5 à 7, dans lequel les nano-plaquettes comportent au moins l'un du graphène, de l'oxyde de graphène, de l'argile, du nitrure de bore et du mica, ou sont constituées d'au moins l'un de ceux-ci.

9. Article de confinement (20) selon l'une quelconque des revendications 1 à 8, dans lequel la paroi (24) comporte une couche interne (36) et une couche externe (38), et la barrière nano-alignée (26) est disposée entre les couches interne et externe (36, 38).

10. Article de confinement (20) selon l'une quelconque des revendications 1 à 9, dans lequel la barrière nano-alignée est appliquée sous la forme d'un système à base aqueuse ou d'un système à base de solvant.

11. Article de confinement (20) selon l'une quelconque des revendications 1 à 10, dans lequel la barrière nano-alignée (26) est constituée de nano-plaquettes s'élevant à un poids en pourcentage compris entre 50 et 99 pour cent.

12. Récipient destiné à stocker un gaz comprimé, le récipient comprenant un article de confinement (20) selon l'une quelconque des revendications précédentes.

13. Récipient selon la revendication 12, comprenant en outre :
une paroi composite (24) ayant une surface interne (30) définissant généralement une chambre (32), dans lequel le gaz comprimé se trouve dans la chambre (32) ; et
un revêtement barrière disposé sur la surface interne (30), et comportant un polymère de liaison, un polymère en dispersion et des nano-plaquettes alignées.

14. Récipient selon la revendication 13, dans lequel le polymère en dispersion représente moins d'environ cinq pour cent en poids de la fraction de liant polymère du revêtement barrière.
